# EUROPÄISCHE PATENTANMELDUNG

(11) **EP 0 844 590 A1**
(43) Veröffentlichungstag der Anmeldung: **27.05.1998**
(21) Anmeldenummer: 97203520.8
(22) Anmeldetag: 12.11.1997
(51) Int. Cl.: G06T 9/00

(54) **Verfahren zur fraktalen Bildcodierung und Anordnung zur Durchführung des Verfahrens**

(30) Priorität: 20.11.1996 DE 19648016
(71) Anmelder: Philips Patentverwaltung GmbH, 22335 Hamburg (DE); Philips Electronics N.V., 5621 BA Eindhoven (NL)
(72) Erfinder: Ibenthal, Achim, Röntgenstrasse 24, 22335 Hamburg (DE)
(74) Vertreter: von Laue, Hanns-Ulrich, Dipl.-Ing.

(57) **Zusammenfassung**

Es wird ein Verfahren zur fraktalen Bildkodierung von Einzelbildern oder Bildsequenzen angegeben, das eine Verbesserung des Enkodierungsergebnisses sowie eine Verringerung des Rechenaufwandes gestattet und bei welchem
- jedes Bild in Rangeblöcke zerlegt wird, welche sich nicht überlappen und gemeinsam den vollständigen Bildinhalt enthalten,
- Rangegebiete erzeugt werden, welche jeweils einen Rangeblock enthalten, welcher kleiner ist als das Rangegebiet, daß das übrige Rangegebiet jeweils mit einem vorgegebenen Signalwert ausgefüllt wird
- Domaingebiete erzeugt werden, die gleiche Größe wie die Rangegebiete aufweisen und die jeweils wenigstens Teile des Bildinhalts, vorzugsweise auch in transformierter Form, enthalten,
- die Bilddaten der Rangegebiete und der Domaingebiete jeweils einer Fourier-Transformation unterzogen werden,
- von einem der beiden transformierten Signale ein konjugiert komplexes Signal gebildet und mit dem anderen Signal multipliziert wird,
- dieses Produkt auf eine vorgegebene Amplitude normiert wird,
- das normierte Signal einer inversen Fourier-Transformation unterzogen wird,
- für jedes Rangegebiet das Maximum dieses rücktransformierten Signals ermittelt wird, welches innerhalb eines Domaingebietes die Position desjenigen Domainblocks angibt, dessen Bildinhalt den Bildinhalt des Rangeblocks am besten annähert,
- für diese Domainblöcke diejenigen Skalierungs- und Offset-Faktoren ermittelt werden, bei deren Anwendung die gefundenene Domainblöcke mit der geringsten Abweichung auf die Rangeblöcke abbildbar sind,
- und bei welchem das kodierte Signal die Adressen dieser Domainblöcke, deren Bildinhalt die Rangeblöcke am besten annähert, die Skalierungs- und Offset-Faktoren und gegebenenfalls die bei der Erzeugung der Domaingebiete eingesetzten Transformationsfunktionen enthält.

## Beschreibung

Die Erfindung betrifft ein Verfahren zur fraktalen Bildkodierung von Einzelbildern oder Bildsequenzen und eine Anordnung zur Durchführung des Verfahrens.

Bei bekannten Anordnungen oder Verfahren zur fraktalen Bildkodierung wird das Bild in sogenannte Rangeblöcke zerlegt. Diese Blöcke haben unter sich gleiche Größe, überlappen sich nicht und erfassen den gesamten Bildinhalt des Bildes. Es werden ferner sogenannte Domainblöcke erzeugt, welche Bilddaten jeweils eines bestimmten Bildbereiches enthalten. Da die Domainblöcke sich überlappen können, beträgt die Zahl der Domainblöcke das Mehrfache der Zahl der Rangeblöcke. Ein solches Verfahren ist beispielsweise aus "Fractal Image Coding and Magnification using Invariant Moments", D. Götting, A. Ibenthal und R.-R. Grigat, in Nato Advance Study Institute on Fractal Image Encoding and Analysis, Trondheim, Norway, 1995, bekannt.

Zu jedem Rangeblock wird ein Domainblock gesucht, der mittels einer (affinen) Transformation auf den Rangeblock mit geringstmöglicher Abweichung abbildbar ist.

Bei der Kodierung besteht das Problem, daß infolge der Zahl der großen Domainblöcke der Suchvorgang des günstigsten Domainblockes für jeden Rangeblock einen beträchtlichen rechnerischen Aufwand erfordert. Ferner ist dieses bekannte Verfahren durch die feste Einteilung des Bildes insbesondere in die Domainblöcke unflexibel.

Es ist Aufgabe der Erfindung, dieses Verfahren zur fraktalen Bildkodierung dahingehend weiterzuentwickeln, daß der rechnerische Aufwand für das Auffinden geeigneter Domainblöcke verringert und das Kodierungsergebnis verbessert wird.

Diese Aufgabe wird durch das erfindungsgemäße Verfahren zur fraktalen Bildkodierung gelöst, bei welchem
- jedes Bild in Rangeblöcke zerlegt wird, welche sich nicht überlappen und gemeinsam den vollständigen Bildinhalt enthalten,
- Rangegebiete erzeugt werden, welche jeweils einen Rangeblock enthalten, welcher kleiner ist als das Rangegebiet, daß das übrige Rangegebiet jeweils mit einem vorgegebenen Signalwert ausgefüllt wird
- Domaingebiete erzeugt werden, die gleiche Größe wie die Rangegebiete aufweisen und die jeweils wenigstens Teile des Bildinhalts, vorzugsweise auch in transformierter Form, enthalten,
- die Bilddaten der Rangegebiete und der Domaingebiete jeweils einer Fourier-Transformation unterzogen werden,
- von einem der beiden transformierten Signale ein konjugiert komplexes Signal gebildet und mit dem anderen Signal multipliziert wird,
- dieses Produkt auf eine vorgegebene Amplitude normiert wird,
- das normierte Signal einer inversen Fourier-Transformation unterzogen wird,
- für jedes Rangegebiet das Maximum dieses rücktransformierten Signals ermittelt wird, welches innerhalb eines Domaingebietes die Position desjenigen Domainblocks angibt, dessen Bildinhalt den Bildinhalt des Rangeblocks am besten annähert,
- für diese Domainblöcke diejenigen Skalierungs- und Offset-Faktoren ermittelt werden, bei deren Anwendung die gefundenene Domainblöcke mit der geringsten Abweichung auf die Rangeblöcke abbildbar sind,
- und bei welchem das kodierte Signal die Adressen dieser Domainblöcke, deren Bildinhalt die Rangeblöcke am besten annähert, die Skalierungs- und Offset-Faktoren und gegebenenfalls die bei der Erzeugung der Domaingebiete eingesetzten Transformationsfunktionen enthält.

Jedes zu kodierende Bild wird in Rangeblöcke zerlegt. Diese Blöcke überlappen sich nicht, geben aber insgesamt den vollständigen Bildinhalt wieder. Aus den Rangeblöcken werden sogenannte Rangegebiete erzeugt. Jedes Rangegebiet enthält einen Rangeblock, der kleiner als das Rangegebiet ist. Der übrige Bereich eines jeden Rangegebietes wird mit einem vorgegebenen Signalwert ausgefüllt, welcher keine Information trägt.

Ferner werden Domaingebiete erzeugt, die die gleiche Größe haben wie die Rangegebiete. Die Domaingebiete enthalten jeweils wenigstens Teile des Bildinhalts des Bildes, vorzugsweise auch in transformierter Form. Die gesamten Domaingebiete sind jeweils durch Bildinhalte des Bildes, gegebenenfalls auch in transformierter Form, ausgefüllt.

Es werden jeweils die Daten eines Rangegebietes und derjenigen Domaingebiete, in denen nach Ähnlichkeiten gesucht werden soll, einer Fourier-Transformation unterzogen. Die beiden transformierten Signale, von denen eines in sein konjugiertes komplexes Signal umgewandelt wird, werden miteinander multipliziert und anschließend normiert. Nach der Umwandlung mittels der Fourier-Transformation sind die Signale nunmehr von dem Ortsbereich in den Frequenzbereich umgesetzt worden. Durch die Normierung weist das Signal eine Amplitude von 1 auf. Die Information steckt nunmehr nur noch in der Phase dieses Signals im Frequenzbereich. Dieses Signal wird rücktransformiert, d.h. wieder in den Ortsbereich transformiert. Dieses rücktransformierte Signal hat nun in seiner Amplitude diejenige Information, die angibt, welcher Bereich innerhalb eines Domaingebietes auf das Rangegebiet und damit auf den in ihm enthaltenen Rangeblock mit der geringstens Abweichung abbildbar ist. Dieser Bereich eines Domaingebietes wird im folgenden als Domainblock bezeichnet. Es wird also durch Auswertung des Maximums des rücktransformierten Signals festgestellt, welcher Domainblock in den Domaingebieten, in denen gesucht wurde, mit einem Rangeblock, dessen Rangegebiet mit den Domaingebieten verglichen wurde, die größte Ähnlichkeit aufweist. Hierbei ist im Gegensatz zu den Verfahren nach dem Stande der Technik die Position des Domainblocks frei. Der Block hat zwar das gleiche Format wie der Rangeblock, es liegt jedoch keine feste Einteilung des Bildes wie bei den Verfahren nach dem Stand der Technik vor. Der Block an sich kann eine beliebige Position innerhalb des Domaingebietes haben. Im Gegensatz dazu wird bei Verfahren nach dem Stand der Technik jeweils gerade eine Blockposition bearbeitet.

Für den gefundenen Domainblock werden diejenigen Skalierungs- und Offset-Faktoren ermittelt, bei deren Anwendung auf den Domainblock dieser mit der geringsten Abweichung auf den Rangeblock des Rangegebietes abbildbar ist.

Das kodierte Signal beinhaltes die Adressen der gefundenen Domainblöcke, deren Bildinhalt die Rangeblöcke am besten annähert. Ferner werden die Skalierungs- und Offset-Faktoren übertragen sowie die gegebenenfalls bei der Abbildung der Domaingebiete auf die Rangegebiete eingesetzten Transformationsfunktionen.

Der Hauptvorteil des erfindungsgemäßen Verfahrens liegt darin, daß eine Suche nach einem geeigneten Domainblock nicht, wie bei den Verfahren nach dem Stande der Technik, im Ort-/Zeitbereich, sondern im Frequenzbereich erfolgt. Nach der Fourier-Transformation werden die Signale im Frequenzbereich multipliziert und normiert. Dieses normierte Signal wird rücktransformiert. Durch einfache Maximumauswertung des rücktransformierten Signals kann die optimale Position eines Domainblockes innerhalb des Domaingebietes gefunden werden. Der Rechenaufwand dieser Vorgehensweise ist deutlich geringer als bei den Verfahren nach dem Stande der Technik, bei denen im Ortsbereich die Bilddaten jedes Rangesblockes mit jedem Domainblock verglichen werden müssen. Darüber hinaus erzielt das erfindungsgemäße Verfahren den Vorteil, daß das Kodierungsergebnis verbessert wird. Dies kann dadurch erreicht werden, daß die Domaingebiete bezüglich der Blockeinteilung nicht fest sind. D.h. die Domainblöcke haben zwar eine bestimmte Größe, ihre Position ist jedoch frei und nicht an ein bestimmtes Blockraster gebunden.

Das Kodierungsergebnis kann gegebenenfalls noch dadurch verbessert werden, daß, wie gemäß einer Ausgestaltung der Erfindung vorgesehen ist, für die gefundenen Domainblöcke ein Nachmatching vorgenommen wird, bei welchem diejenigen Bereiche ermittelt werden, welche durch den als ähnlichsten gefundenen Domainblock mit einem vorgegebenen maximalen Fehler angenähert werden, daß die übrigen Bereiche jedes Rangeblocks unterteilt werden und daß für diese mittels des Verfahrens ähnlichere Domainblöcke gesucht werden.

Auf diese Weise können die gefundenen Domainblöcke nochmals unterteilt werden. Es werden innerhalb eines für einen Rangeblock gefundenen Domainblock nur diejenigen Bereiche zur Kodierung eingesetzt, die den vorgegebenen Fehlerwert unterschreiten. Die übrigen Bereiche der Rangeblöcke können dem Verfahren erneut zugeführt werden, d.h. sie werden wieder in Rangegebiete eingesetzt und mit Domaingebieten verglichen. Auf diese Weise kann für diese Blöcke gegebenenfalls eine noch günstigere Kodierung gefunden werden.

Im Ergebnis bedeutet dies, daß die Domainblöcke unterschiedliche Größe und Position haben können. Ein Rangeblock kann durch verschiedene Domainblöcke verschiedener Größe und verschiedener Position kodiert werden. Im allgemeinen Fall ist die Kontur der entstehenden Range- bzw. Domainblöcke variabel, so daß Rangegebiete beliebiger Form kodiert werden. Damit können die Daten noch besser kodiert werden.

Gemäß einer weiteren Ausgestaltung der Erfindung ist vorgesehen, daß die Domaingebiete den gesamten Bildinhalt eines Bildes, insbesondere wenigstens teilweise auch in transformierter Form, vorzugsweise in gedrehter und/oder gespiegelter Form, wiedergeben.

Da die Größe der Domaingebiete im Prinzip beliebig ist, können diese so ausgelegt werden, daß sie jeweils den gesamten Bildinhalt eines Bildes wiedergeben. Darüber hinaus können sie diesen Bildinhalt teilweise auch in transformierter Form, beispielsweise gedrehter oder transformierter Form, enthalten. Auf diese Weise entsteht ein relativ großes Domaingebiet, an dessen Größe die Größe des Rangegebietes anzugleichen ist. Dies bereitet bei dem erfindungsgemäßen Verfahren keine Probleme, da der Rangeblock innerhalb des Rangegebietes gleich groß bleibt, jedoch das übrige Rangegebiet mit dem vorgegebenen Signalwert entsprechend vergrößert wird.

Hierdurch tritt der beträchtliche Vorteil ein, daß in einem Suchvorgang der gesamte Bildinhalt des Bildes, vorzugsweise auch in transformierter Form, mit dem Rangegebiet verglichen werden kann. Es kann also für ein Rangegebiet und damit für den in diesem enthaltenen Rangeblock in einem Suchvorgang in dem gesamten Bild derjenige Domainblock gesucht werden, der mit der geringsten Abweichung auf den Rangeblock abbildbar ist. Hierbei kann das Domaingebiet das ursprüngliche Bild teilweise auch in transformierter Form enthalten, wodurch weitere Einzel-Suchvorgänge entfallen. Hierbei tritt insbesondere der Vorteil der Erfindung zutage, daß durch einfache Maximum-Auswertung des rücktransformierten Signals der optimale Domainblock gefunden werden kann.

Für optimale Suchergebnisse ist es vorteilhaft, wenn innerhalb jedes Rangegebietes der Rangeblock in der Weise eingebettet wird, daß, wie gemäß einer weiteren Ausgestaltung der Erfindung vorgesehen ist, innerhalb jedes Rangegebietes Übergangszonen zwischen dem Rangeblock und dem übrigen Rangegebiet vorgesehen sind, in welchen über eine vorgegebene Anzahl von Bildpunkten hinweg ein weicher Übergang zwischen dem Bildinhalt des Rangeblocks und dem des übrigen Gebiets geschaffen wird.

Durch diesen "weichen" Übergang zwischen dem Rangeblock und dem übrigen Gebiet des Rangegebietes werden Ortsfrequenzen gedämpft, die bei der Suche nach dem Domaingebiet als "Nutzfrequenzen" des Rangeblockes interpretiert werden könnten.

Dabei können die Werte dieser Übergangszonen bzw. der Signalwert des übrigen Rangegebietes gemäß einer weiteren Ausgestaltung der Erfindung so ausgelegt sein, daß die Übergangszonen eine Breite von etwa vier bis sechs Bildpunkten aufweisen und der Signalwert des übrigen Rangegebietes außerhalb des Rangeblocks etwa ein viertel bis ein halb des für den Rangeblock maximal möglichen Signalwertes beträgt.

Das oben beschriebene Verfahren kann für eine Intra-Kodierung für einzelne Bilder in der Weise eingesetzt werden, daß die Rangegebiete und Domaingebiete aus einem Bild erzeugt werden. Eine Intra-Kodierung aufeinanderfolgender Bilder, also von Bildsequenzen, erfolgt jedoch vorteilhaft dadurch, daß, wie gemäß einer weiteren Ausgestaltung der Erfindung vorgesehen ist, für eine Kodierung von Bildsequenzen die Bildinhalte wenigstens einiger der Rangegebiete und/oder wenigstens einiger der Domaingebiete aus verschiedenen Bildern einer Bildsequenz stammen.

Nachfolgend wird ein Ausführungsbeispiel der Erfindung anhand der Zeichnungen näher erläutert. Es zeigen:
Fig. 1 ein zu kodierendes Bild sowie ein in diesem Bild markierten Rangeblock,
Fig. 2 ein Domaingebiet, das aus dem Bild gemäß Fig. 1 generiert worden ist,
Fig. 3 ein Rangegebiet, in dem der Rangeblock gemäß Fig. 1 enthalten ist,
Fig. 4 ein Vergleichsergebnis eines in dem Domaingebiet gemäß Fig. 2 gefundenen Domainblocks mit dem Rangeblock gemäß Fig. 1 und
Fig. 5 ein Blockschaltbild eines Enkoders nach dem erfindungsgemäßen Verfahren arbeitet.

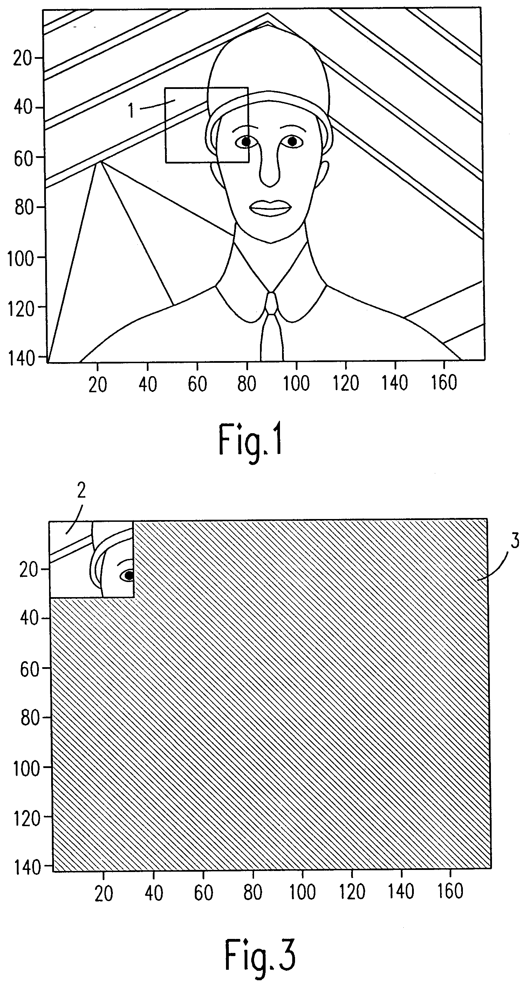

In Fig. 1 ist ein zu kodierendes Bild dargestellt. Das Bild zeigt einen Arbeiter vor einem Gebäude.

Das Bild gemäß Fig. 1 weist in diesem Beispielsfalle in horizontaler Richtung 176 Bildpunkte und in vertikaler Richtung 144 Bildpunkte auf. Das Bild ist vollständig mittels fraktaler Bildkodierung zu kodieren. Dazu wird es in Rangeblöcke zerlegt. Jeder Rangeblock kann beispielsweise 32x32 Bildpunkte enthalten. Alle Rangeblöcke zusammen geben den gesamten Bildinhalt des Bildes wieder, überlappen sich jedoch gegenseitig nicht.

Für jeden Rangeblock ist dasjenige Gebiet des Bildes zu suchen, das in unmittelbarer oder in transformierter Form den Bildinhalt des Rangeblockes mit der geringsten Abweichung wiedergibt.

Bei den Verfahren nach dem Stande der Technik war die Einteilung der Domainblöcke fest vorgegeben, d.h. das Bild wurde in Domainblöcke eingeteilt, deren Position und Größe festlag.

Im folgenden soll anhand des in der Zeichnung dargestellten Beispiels erläutert werden, daß die Domainblöcke, die gemäß dem erfindungsgemäßen Verfahren gesucht werden, in ihrer Position und Einteilung frei sind und daß durch das erfindungsgemäße Verfahren eine Beschleunigung des Suchvorgangs und eine Verbesserung des Enkondierungsergebnisses erzielt wird.

In Fig. 1 ist ein Rangeblock 1 exemplarisch eingetragen. Dieser Rangeblock enthält Teile des Gesichts und des Helms des Arbeiters sowie Teile des Gebäudes im Hintergrund.

Für diesen Rangeblock 1 muß, ebenso wie für alle anderen Rangeblöcke des Bildes, die in Fig. 1 nicht eingetrgen sind, derjenige Domainblock des Bildes gesucht werden, der den Bildinhalt des Rangeblockes 1, gegebenenfalls in transformierter Form, mit der geringsten Abweichung wiedergibt.

Bei dem erfindungsgemäßen Verfahren wird diese Suche nicht in einzelnen Domainblöcken vorgenommen, sondern in Domaingebieten. Diese Domaingebiete können Teiles des Bildes gemäß Fig. 1 enthalten, vorzugsweise enthalten sie aber das gesamte Bild in verkleinerter Form.

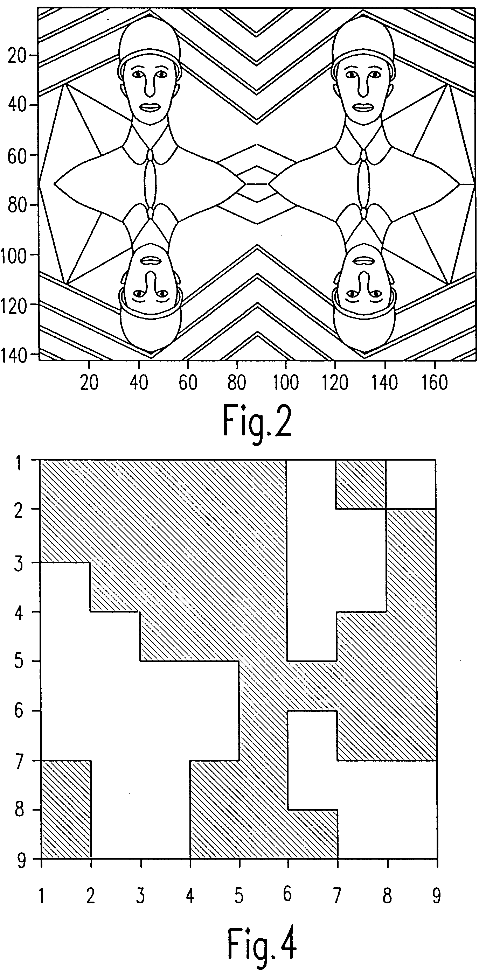

Dies ist exemplarisch in Fig. 2 dargestellt. Das Domaingebiet gemäß Fig. 2 zeigt in dem oberen linken Viertel das Bild gemäß Fig. 1 in um den Faktor 2 verkleinerter Form. Ferner enthält es drei Spiegelungen desselben Bildes. Das Domaingebiet gemäß Fig. 2 enthält also das vollständige Bild in verkleinerter Form mit dem ursprünglichen Bildinhalt sowie in jeweils drei gespiegelten Varianten. Bei dem erfindungsgemäßen Verfahren soll nun innerhalb des Domaingebietes gemäß Fig. 2 derjenige Domainblock gesucht werden, der den Rangeblock 1 gemäß Fig. 1 mit der geringsten Abweichung wiedergibt.

Die Einteilung der Domainblöcke innerhalb des Domaingebietes gemäß Fig. 2 ist dabei frei. Es sind keine festen Blockraster oder ähnliches vorgegeben.

Da das Domaingebiet gemäß Fig. 2 deutlich größer ist als der Rangeblock 1 des Bildes 1, der nur einen Teil des Bildes enthält, wird bei dem erfindungsgemäßen Verfahren ein Rangegebiet erzeugt.

Dieses ist exemplarisch in Fig. 3 dargestellt. Fig. 3 zeigt einen Ausschnitt 2, der den Rangeblock 1 gemäß Fig. 1 enthält. Das Rangegebiet gemäß Fig. 3 weist ebenso wie das Domaingebiet gemäß Fig. 2 176x144 Bildpunkte auf. Um diese gleiche Größe von Rangegebiet gemäß Fig. 3 und Domaingebiet gemäß Fig. 2 zu erhalten, ist der übrige Bereich 3 des Rangegebietes gemäß Fig. 3 mit einem festen Signalwert, vorzugsweise einem Grauwert. ausgefüllt.

Auf diese Weise ist gleiche Größe der Gebiete erzielt.

Der Suchvorgang an sich erfolgt in der Weise, daß die Datensignale des Rangegebietes gemäß Fig. 3 und des Domaingebietes gemäß Fig. 2 jeweils einer Fourier-Transformation unterzogen werden, anschließend eines der Signale in sein konjugiert komplexes Signal transformiert wird und nachfolgend beide Signale multipliziert werden. Noch im Frequenzbereich werden die Signale normiert, d.h. auf eine Amplitude 1 bezogen. Nach der Rücktransformation kann durch eine Maximum-Auswertung des rücktransformierten Signals innerhalb des Domaingebietes gemäß Fig. 2 durch Auswertung der Position dieses Maximums die Position desjenigen Domainblockes ermittelt werden, der mit dem Rangeblock 2 des Rangegebietes 3 die größte Ähnlichkeit aufweist.

Diese Vorgehensweise erfordert relativ wenig Rechenaufwand und hat andererseits den Vorteil, daß die Lage des Domainblockes frei ist und damit ein verbessertes Kodierungsergebnis erzielt wird.

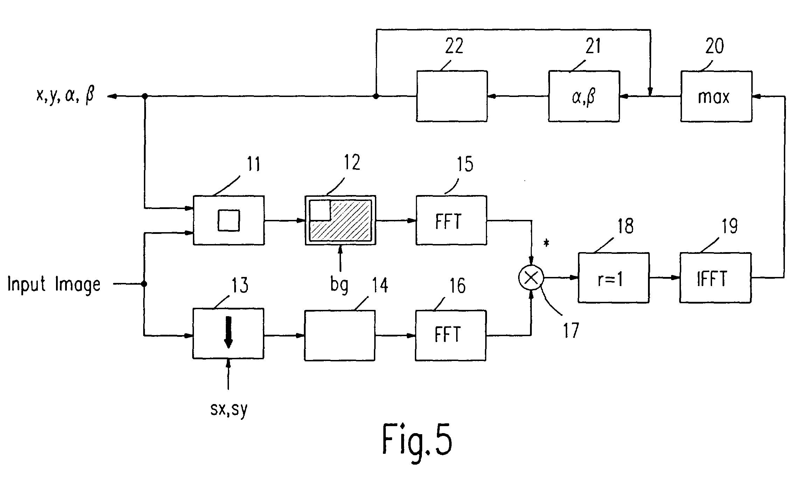

Fig. 5 zeigt in Blockschaltbild eines Enkoders, der nach dem erfindungsgemäßen Verfahren arbeitet.

Dem Enkoder wird eingangsseitig ein Eingangsbild, beispielsweise das Bild gemäß Fig. 1, zugeführt. Das entsprechende Bildsignal ist in Fig. 5 ist als "Input-Image" gekennzeichnet.

Das Eingangsbild wird Mitteln 11 zur Rangeblock-Auswahl und Einteilung des Bildes in Rangeblöcke zugeführt. Mittels der Mittel 11 wird beispielsweise der Rangeblock 1 der Darstellung gemäß Fig. 1 ausgewählt. Das Ausgangssignal wird Mitteln 12 zur Erzeugung der Rangegebiete zugeführt. Diese Mittel 12 erzeugen ein Rangegebiet, beispielsweise dasjenige gemäß Fig. 3. Dazu wird dem Rangegebiet außer dem Rangeblock 2 gemäß Fig. 3 in den übrigen Gebieten 3 ein Grauwert zugeführt. Das Ausgangssignal der Mittel 12 liefert ein Rangegebiet, beispielsweise dasjenige gemäß Fig. 3.

Das Eingangssignal "Input-Image" wird ferner Mitteln 13 zur Verkleinerung des Bildinhalts zugeführt. Diese erzeugen beispielsweise das linke obere Viertel des Domaingebietes gemäß Fig. 2.

Das Ausgangssignal der Mittel 13 gelangt auf Mittel 14 zur Erzeugung von Transformationen. Die Mittel 14 erzeugen beispielsweise die übrigen drei Blöcke des Domaingebietes gemäß Fig. 2.

Sowohl die Ausgangssignale der Mittel 12, wie auch diejenigen der Mittel 14 gelangen jeweils auf Mittel 15 bzw. 16 zur Fourier-Transformation. Die Ausgangssignale der Mittel 15 bzw. 16 werden einem Multiplizierer 17 zugeführt. Zuvor wird jedoch eines der Signale der Mittel 15 oder 16 in sein konjugiertes komplexes Signal umgewandelt. Vorzugsweise geschieht dies mit dem Ausgangssignal der Mittel 15, da dann die Schaltungsanordnung gemäß Fig. 5 die Vektoren zur Bestimmung des Domainblockes mit dem richtigen Vorzeichen angibt.

Das Ausgangssignal des Multiplizierers 17 gelangt auf Mittel 18 zur Normierung. Hier wird die Amplitude auf 1 normiert, so daß das Signal keine Amplitudeninformation mehr enthält. Damit wird der Vorteil erreicht, daß Amplitudenvariationen des Bildinhaltes bei dem Vergleich der Domaingebiete mit den Rangegebieten keine Rolle spielen. Das normierte Signal wird anschließend Mitteln 19 zur inversen Fourier-Transformation zugeführt, welche das Signal wieder in den Ortsbereich zurückwandeln. Das Ausgangssignal der Mittel 19 wird Mitteln 20 zur Maximum-Bestimmung zugeführt. Durch diese Maximum-Bestimmung wird diejenige Position des Domainblockes innerhalb des Domaingebietes angegeben, dessen Bildinhalt den Rangeblock des Rangegebietes am besten annähert. Zur Enkodierung werden der Skalierungsfaktor α und der Offset-Faktor β ermittelt, bei deren Anwendung die Ähnlichkeit dieser beiden Blöcke am größten ist. Dies geschieht mittels Skalierungsmitteln 20.

Im einfachsten Fall ist hiermit bereits eine Kodierung eines Rangeblockes mittels eines Domainblockes gelungen. Dieses Verfahren weist den Vorteil auf, daß es sehr wenig Rechenaufwand erfordert, was insbesondere mittels der Fourier-Transformation und der anschließenden Rücktransformation nach Multiplikation gelingt.

Das Ergebnis der Enkodierung kann gegebenenfalls noch weiter verbessert werden. Dazu werden die Daten des gefundenen Domainblocks mit den Daten des gefundenen Rangeblocks verglichen. Da dabei entstehende Fehlerabweichung kann gegebenenfalls zur weiteren Verbesserung des Kodierungsergebnisses herangezogen werden.

Fig. 4 zeigt exemplarisch eine solche Fehlerabweichung für einen Rangeblock und den gefundenen Domainblock. Der Fehler wird mit einem vorgegebenen Fehler-Sollwert verglichen. Diejenigen Bereiche des Rangeblockes, die mit einem Fehler geringer als dem vorgegebenen Fehlerwert mittels des Domainblockes abgebildet werden können, sind in der Darstellung gemäß Fig. 4 hell gekennzeichnet. Die übrigen Bereiche, mit einem größeren Fehler abgebildet werden, sind schraffiert gekennzeichnet.

Gemäß einer vorteilhaften Ausgestaltung der Erfindung besteht die Möglichkeit, die dunkel gekennzeichneten Gebiete des Rangeblockes gemäß Fig. 4 nicht mittels des gefundenen Domainblocks abzubilden, sondern für diese Gebiete erneut Domainblöcke zu suchen, die besser geeignet sind, d.h. die eine Abbildung mit geringerer Fehlerabweichung gestatten. Dazu sind in der Darstellung gemäß Fig. 5 Mittel 22 zum Nachmatchen vorgesehen. Die Mittel 22 nehmen den Fehlervergleich, dessen Ergebnis in Fig. 4 schematisch dargestellt ist, vor und liefern ausgangsseitig die Daten derjenigen Unterbereiche der Rangeblöcke, die neu zu kodieren sind. Die entsprechenden Daten werden den Mitteln 11 zur Rangeblock-Einteilung zugeführt und mittels des Verfahrens erneut kodiert. Zuvor wird jedoch getestet, ob die nicht hinreichend gut approximierten Rangegebiete (z.B. die schraffierten Bereiche in Fig. 4) mit anderen α, β approximiert werden können.

Im übrigen liefert die Schaltungsanordnung gemäß Fig. 5 ausgangsseitig die Adressen X und Y derjenigen Domainblöcke, die für die Rangeblöcke jeweils als die ähnlichsten gefunden wurden. Außerdem liefert die Anordnung für diese Domainblöcke die jeweils eingesetzten Skalierungsfaktoren α und Offset-Faktoren β.

Im Ergebnis arbeitet das erfindungsgemäße Verfahren mit geringem Rechenaufwand und hoher Flexibilität, so daß sowohl Geschwindigkeit der Enkodierung sowie auch Ergebnis der Enkodierung verbessert werden können. Die Verbesserung der Enkodierung kann durch das Nachmatchen noch weiter gesteigert werden.

## Patentansprüche

1. Verfahren zur fraktalen Bildkodierung von Einzelbildern oder Bildsequenzen, bei welchem
- jedes Bild in Rangeblöcke zerlegt wird, welche sich nicht überlappen und gemeinsam den vollständigen Bildinhalt enthalten,
- Rangegebiete erzeugt werden, welche jeweils einen Rangeblock enthalten, welcher kleiner ist als das Rangegebiet, daß das übrige Rangegebiet jeweils mit einem vorgegebenen Signalwert ausgefüllt wird
- Domaingebiete erzeugt werden, die gleiche Größe wie die Rangegebiete aufweisen und die jeweils wenigstens Teile des Bildinhalts, vorzugsweise auch in transformierter Form, enthalten,
- die Bilddaten der Rangegebiete und der Domaingebiete jeweils einer Fourier-Transformation unterzogen werden,
- von einem der beiden transformierten Signale ein konjugiert komplexes Signal gebildet und mit dem anderen Signal multipliziert wird,
- dieses Produkt auf eine vorgegebene Amplitude normiert wird,
- das normierte Signal einer inversen Fourier-Transformation unterzogen wird
- für jedes Rangegebiet das Maximum dieses rücktransformierten Signals ermittelt wird, welches innerhalb eines Domaingebietes die Position desjenigen Domainblocks angibt, dessen Bildinhalt den Bildinhalt des Rangegeblocks am besten annähert,
- für diese Domainblöcke diejenigen Skalierungs- und Offset-Faktoren ermittelt werden, bei deren Anwendung die gefundenene Domainblöcke mit der geringsten Abweichung auf die Rangeblöcke abbildbar sind,
- und bei welchem das kodierte Signal die Adressen dieser Domainblöcke, deren Bildinhalt die Rangeblöcke am besten annähert, die Skalierungs- und Offset-Faktoren und gegebenenfalls die bei der Erzeugung der Domaingebiete eingesetzten Transformationsfunktionen enthält.

2. Verfahren nach Anspruch 1, dadurch gekennzeichnet, daß für die gefundenen Rangeblöcke ein Nachmatching vorgenommen wird, bei welchem diejenigen Bereiche ermittelt werden, welche durch den als ähnlichste gefundene Domainblock mit einem vorgegebenen maximalen Fehler angenähert werden, daß die übrigen Bereiche jedes Rangeblocks unterteilt werden und daß für diese mittels des Verfahrens ähnlichere Domainblöcke gesucht werden.

3. Verfahren nach Anspruch 1 oder 2, dadurch gekennzeichnet, daß die Domaingebiete den ursprünglichen Bildinhalt in verkleinerter Form enthalten.

4. Verfahren nach einem der Ansprüche 1 bis 3, dadurch gekennzeichnet, daß die Domaingebiete den gesamten Bildinhalt eines Bildes, insbesondere wenigstens teilweise auch in transformierter Form, vorzugsweise in gedrehter und/oder gespiegelter Form, wiedergeben.

5. Verfahren nach Anspruch einem der Ansprüche 1 bis 4, dadurch gekennzeichnet, daß innerhalb jedes Rangegebietes Übergangszonen zwischen dem Rangeblock und dem übrigen Rangegebiet vorgesehen sind, in welchen über eine vorgegebene Anzahl von Bildpunkten hinweg ein weicher Übergang zwischen dem Bildinhalt des Rangeblocks und dem des übrigen Gebiets geschaffen wird.

6. Verfahren nach Anspruch 5, dadurch gekennzeichnet, daß die Übergangszonen eine Breite von etwa vier bis sechs Bildpunkten aufweisen und der Signalwert des übrigen Rangegebietes außerhalb des Rangeblocks etwa ein viertel bis ein halb des für den Rangeblock maximal möglichen Signalwertes beträgt.

7. Verfahren nach einem der Ansprüche 1 bis 6, dadurch gekennzeichnet, daß für eine Kodierung von Bildsequenzen die Bildinhalte wenigstens einiger der Rangegebiete und/oder wenigstens einiger der Domaingebiete aus verschiedenen Bildern einer Bildsequenz stammen.

8. Enkoder zur Durchführung des Verfahrens nach einem der Ansprüche 1 bis 7, dadurch gekennzeichnet, daß Mittel (11) zur Rangeblock-Auswahl zur Einteilung eines der Anordnung zugeführten Bildes in Rangeblöcke vorgesehen sind, daß Mittel (12) zur Erzeugung der Rangegebiete aus den Rangeblöcken vorgesehen sind, daß Mittel (13) zur Verkleinerung des Bildinhalts vorgesehen sind, denen die Werte des Bildes zugeführt werden und deren Ausgangssignal Mitteln (14) zur Erzeugung von Transformationen zugeführt werden, welche ausgangsseitig die Domaingebiete liefern, daß Mittel (15,16) zur Fourier-Transformation vorgesehen sind, denen die Signale der Rangegebiete und der Domaingebiete zugeführt werden und welche beide Signale transformieren und eines der transformierten Signale in ein konjugiert komplexes Signal umformen, daß ein Multiplizierer (17) vorgesehen ist, der die Ausgangssignale der Mittel zur Fourier-Transformation multipliziert und dessen Ausgangssignal mittels Mitteln (18) zur Normierung zugeführt wird, welche diese Signal auf einen vorgegebenen Signalwert normieren, daß Mittel (19) zur inversen Fourier-Transformation vorgesehen sind, welchen das normierte Signal zugeführt wird und deren Ausgangssignal Mitteln (20) zur Maximum-Bestimmung zugeführt wird, deren Ausgangssignal das Maximum seines Eingangssignals markiert und damit zu jedem Rangegebiet dasjenige Domaingebiet angibt, das zu diesem als das ähnlichste gefunden wurde, und daß Skalierungsmittel (21) vorgesehen sind, welche für dieses Domaingebiet diejenigen Skalierungs- und Offset-Faktoren angeben, unter deren Anwendung das gefundene Domaingebiet mit der geringstmöglichen Abweichung auf das Rangegebiet abgebildet werden kann und welche zusammen mit der Adresse des Rangegebietes übertragen werden.

9. Enkoder nach Anspruch 8, dadurch gekennzeichnet, daß den Skalierungsmitteln (21) Mittel (22) zum Nachmatchen nachgeschaltet sind, die für die Rangegebiete diejenigen Bereiche ermitteln, welche durch das als ähnlichste gefundene Domaingebiet mit einem vorgegebenen maximalen Fehler angenähert werden, die die übrigen Bereiche jedes Rangegebietes unterteilen und die die Adressen dieser Gebiete den Mitteln zur Einteilung eines Bildes in Rangeblöcke zuführen.
